# FASCICULE DE BREVET EUROPEEN

(11) **EP 1 792 785 B1**
(45) Date de publication et mention de la délivrance du brevet: **19.01.2011**
(21) Numéro de dépôt: 06290268.9
(22) Date de dépôt: 16.02.2006
(51) Int. Cl.: B60R 19/16

(54) **Dispositif de châssis de véhicule automobile**
Kraftfahrzeug-Chassis
A frame assembly for automotive vehicles

(43) Date de publication de la demande: 06.06.2007
(73) Titulaire: Jean Chereau SAS, 50220 Ducey (FR)
(72) Inventeur: Courteille, Benoît, 50300 Le Val Saint Père (FR)
(74) Mandataire: Casalonga, Axel

(56) Documents cités:
- EP-A- 0 648 644
- EP-A- 1 369 307
- EP-A- 1 612 126
- FR-A- 1 038 120
- FR-A- 2 812 254
- FR-A- 2 860 760

## Description

La présente invention concerne le domaine général des châssis de véhicules automobiles, et notamment des châssis de véhicules automobiles de type poids lourds.

Généralement, un châssis pour véhicule automobile de type poids lourd comprend, à une extrémité arrière, des éléments amortisseurs en saillie par rapport à une surface d'extrémité arrière de caisse du véhicule de manière à amortir les efforts encaissés par le châssis lors d'un accostage du véhicule contre un quai de chargement, et d'éviter ainsi de détériorer la surface arrière de caisse.

A cet effet, les châssis connus comportent deux bras s'étendant de façon transversale vers l'extérieur par rapport à un corps de châssis, chacun des bras étant pourvu sur une face arrière d'un bloc de caoutchouc formant élément amortisseur.

De par leur conception, de tels châssis présentent l'inconvénient de nécessiter des remplacements répétés et onéreux des blocs de caoutchouc amortisseurs. En effet, une fois l'accostage du véhicule effectué, le châssis a tendance, par exemple lors d'un chargement, à s'abaisser, ce qui génère des efforts de cisaillement au niveau des surfaces de contact des blocs de caoutchouc avec le quai de chargement. Dans ces conditions, on conçoit aisément que les blocs de caoutchouc subissent une détérioration particulièrement rapide.

page 1a>

La présente invention vise à remédier aux inconvénients précités, en proposant un dispositif de châssis de véhicule automobile permettant d'accroître la fiabilité et la durée de vie des éléments le constituant.

La présente invention a également pour but de prévoir un dispositif de châssis apte à amortir des chocs horizontaux lors d'un On connaît également, par le document EP-A1-1 612 126, un dispositif de châssis de véhicule pourvu d'un corps de châssis allongé s'étendant sensiblement horizontalement, d'au moins une partie mobile en rotation par rapport au corps de châssis et comprenant des rouleaux en matériau rigide montés à rotation suivant un axe horizontal et un élément amortisseur en matériau souple. accostage et apte à résister à un arrachement vertical, de manière particulièrement simple, efficace et économique.

Le dispositif de châssis de véhicule selon l'invention est pourvu d'un corps de châssis allongé s'étendant sensiblement horizontalement, d'au moins une partie mobile par rapport au corps de châssis et comprenant au moins un rouleau en matériau rigide monté à rotation suivant un axe horizontal et un élément amortisseur en matériau souple. La partie mobile est montée de façon coulissante par rapport au corps de châssis et comprend des bras et une platine de support s'étendant transversalement entre l'extrémité avant des bras. Le rouleau est monté à l'extrémité arrière des bras. L'élément amortisseur est monté sur une face avant de la platine de support. Ledit élément amortisseur présente dans les sens transversal et vertical un encombrement sensiblement égal à celui de la platine de support. Le dispositif est en outre pourvu d'un fourreau de guidage fixé sur le corps de châssis et à l'intérieur duquel sont montés la platine de support et les bras de la partie mobile. Le fourreau comporte des parois latérales et une plaque d'appui avant contre laquelle l'élément amortisseur vient en contact.

Avec un tel dispositif, il devient dès lors possible de réaliser l'amortissement des chocs horizontaux lors de l'accostage du véhicule automobile, et d'obtenir une résistance à l'arrachement vertical qui soit particulièrement satisfaisante, même après un grand nombre d'accostages, et de chargements et/ou de déchargements du véhicule.

En effet, un tel dispositif présente l'avantage de comprendre un élément amortisseur monté entre le corps de châssis et la partie mobile, ce qui permet de se dégager de contraintes de remplacement dudit élément amortisseur dues à une usure prématurée causée par les frottements de l'élément amortisseur contre un quai de chargement lors du chargement et/ou déchargement du véhicule automobile.

En d'autres termes, le rouleau monté à rotation suivant un axe horizontal permet de résister aux efforts verticaux de frottement générés par le quai lors d'un abaissement ou d'un soulèvement du châssis, l'élément amortisseur disposé entre la partie mobile et le châssis permettant, quant à lui, l'amortissement des chocs horizontaux lors de l'accostage.

Ainsi, les fonctions de résistance à l'arrachement vertical et d'amortissement des chocs horizontaux sont réalisées chacune par un de ces éléments, ce qui permet d'obtenir un dispositif pour lequel les opérations de maintenance sont considérablement réduites.

En effet, cette conception permet d'éviter de générer, au niveau de l'élément amortisseur élastique, des sollicitations mécaniques de cisaillement causant généralement une détérioration rapide. L'élément amortisseur travaille uniquement en compression.

Avantageusement, la partie mobile coulisse longitudinalement par rapport au corps de châssis.

Le dispositif peut encore comprendre des éléments de friction montés sur la partie mobile et aptes à coopérer avec les parois latérales du fourreau de guidage pour le guidage de la partie mobile relativement au fourreau.

Préférentiellement, le dispositif comprend au moins un bras monté à une extrémité arrière du corps de châssis de façon sensiblement transversale par rapport audit corps et s'étendant vers l'extérieur, la partie mobile étant montée sur ledit bras.

Ainsi, le dispositif permet non seulement de réaliser l'accostage et le chargement d'un véhicule automobile contre un quai de chargement sans nécessiter un changement régulier de l'élément amortisseur, mais permet également le chargement du véhicule à partir du sol, à l'aide d'un hayon élévateur usuel, qui peut être fixé sur des longerons du châssis.

En effet, le dispositif permettant ainsi de laisser libre une zone centrale située entre les longerons du corps de châssis, il n'est pas nécessaire de prévoir des hayons élévateurs spécifiques aptes à éviter ces éléments pour permettre le chargement du véhicule. Le châssis permet donc d'éviter des coûts supplémentaires relatifs à l'achat d'un hayon élévateur spécifique qui nécessite par ailleurs une maintenance propre.

De préférence, le dispositif comprend une jambe de force montée obliquement entre le corps de châssis et le fourreau de guidage.

Dans un mode de réalisation préféré, le rouleau est réalisé en matière métallique.

L'existence d'un rouleau présentant une surface de contact rigide avec le quai de chargement, permet de rendre négligeable les efforts de cisaillement au niveau du rouleau lors du chargement ou du déchargement du véhicule automobile. En effet, l'utilisation d'un matériau rigide permet de limiter sensiblement un éventuel écrasement du rouleau pouvant limiter sa rotation.

De préférence, le rouleau comprend une surface extérieure de révolution sensiblement bombée.

Avantageusement, l'élément amortisseur comprend un bloc élastomère.

Selon un second aspect, l'invention a également pour objet un véhicule automobile, notamment de type poids lourd, comprenant un dispositif de châssis tel que défini ci-dessus.

La présente invention sera mieux comprise à la lecture de la description détaillée d'un mode de réalisation pris à titre d'exemple nullement limitatif et illustré par les dessins annexés, sur lesquels :
- la figure 1 est une vue en perspective d'un dispositif de châssis de véhicule automobile selon un aspect de l'invention ;
- les figures 2 et 3 sont des vues de dessous partielles du dispositif de la figure 1 ; et
- la figure 4 est une vue éclatée partielle du dispositif de la figure 1.

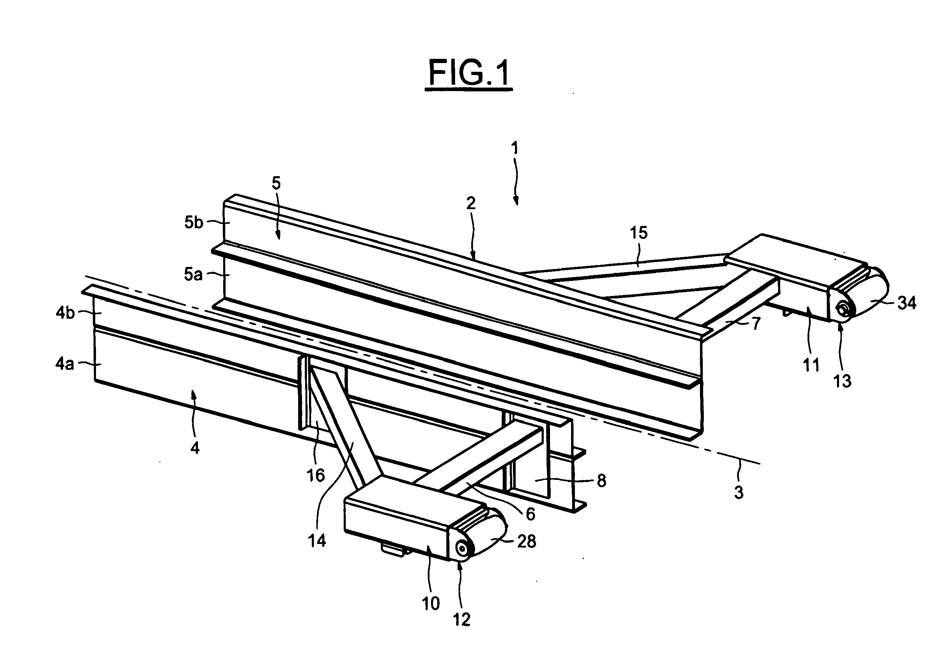

Sur la figure 1, on a représenté la structure générale d'un châssis de véhicule automobile, désignée par la référence numérique générale 1, dans une position supposée horizontale.

Dans l'application envisagée, ce dispositif 1 est destiné à être utilisé pour un véhicule automobile de type poids lourd. Toutefois, on conçoit aisément que le dispositif 1 puisse s'appliquer également à d'autres types de véhicules automobiles, par exemple des véhicules de tourisme.

Le dispositif 1 comprend un corps de châssis 2, s'étendant sensiblement longitudinalement suivant un axe 3 médian. Le corps de châssis 2 comprend deux longerons 4 et 5 espacés, parallèles entre eux et s'étendant sensiblement suivant l'axe 3.

Chaque longeron 4, 5 comprend respectivement ici des poutres inférieure 4a, 5a et supérieure 4b, 5b superposées verticalement et assemblées entre elles. Les poutres inférieures 4a et 5a présentent ici en section un profil en C, les poutres supérieures 4b et 5b présentant un profil en Z. Bien entendu, il est également envisageable de prévoir d'autres types de profils, ou encore de réaliser les longerons à partir d'une seule pièce.

Afin de maintenir un écartement sensiblement constant entre les longerons 4 et 5, il est également envisageable de prévoir des entretoises montées transversalement entre ces longerons. Dans ces conditions, on parle alors de châssis en échelle.

Le dispositif 1 comprend également, au voisinage d'une extrémité arrière, des bras 6, 7 rapportés respectivement de façon transversale par rapport aux longerons 4 et 5 et s'étendant vers l'extérieur. On entend ici par « extrémité arrière », l'extrémité des longerons 4 et 5 destinée à supporter une partie arrière d'un véhicule automobile.

Les bras 6 et 7, de forme générale rectangulaire, sont montés respectivement au niveau des poutres supérieures 4b et 5b, sur des faces orientées vers l'extérieur. En d'autres termes, les bras 6 et 7 sont montés respectivement sur les longerons 4 et 5 sur des faces opposées dans le sens transversal aux faces des longerons en regard l'une par rapport à l'autre.

Le bras 6 peut par exemple être fixé sur le longeron 4 par soudage, ou encore par boulonnage. La fixation du bras 6 est réalisée via une pièce de renfort 8 intermédiaire montée sur la face extérieure du longeron 4, par exemple par soudage ou boulonnage. D'une manière analogue, le bras 7 est monté sur le longeron 5, via une pièce de renfort intermédiaire (non visible sur les figures).

De manière à permettre l'amortissement des chocs horizontaux lors de l'accostage du véhicule automobile, notamment contre un quai de chargement, et de résister à l'arrachement vertical, le châssis 1 comprend également, à l'extrémité extérieure de chacun des bras 6 et 7, un fourreau 10, 11 à l'intérieur duquel peut coulisser une partie mobile 12, 13 apte à assurer cette double fonction. Les parties mobiles 12 et 13, ainsi que les fourreaux de guidage 10 et 11 sont respectivement identiques entre eux et disposés de façon symétrique, en considérant l'axe 3.

Afin d'accroître la résistance mécanique des fourreaux de guidage 10 et 11 ainsi que des bras 6 et 7, notamment lors de l'accostage du véhicule automobile, le dispositif 1 comprend également des jambes de force 14 et 15, montées respectivement obliquement entre les longerons 4 et 5, et une extrémité avant des fourreaux de guidage 10 et 11.

Dans ces conditions, le longeron 4, 5 et la jambe de force 14, 15 ainsi que le bras 6, 7 et le fourreau de guidage 10, 11 forment un triangle indéformable. Les jambes de force 14 et 15 peuvent avantageusement être rapportées par soudage ou par boulonnage. De manière analogue à la fixation des bras 6 et 7 sur les longerons 4 et 5, les jambes de force 14 et 15 sont ici rapportées sur les longerons 4 et 5, via des pièces de renfort intermédiaires 16.

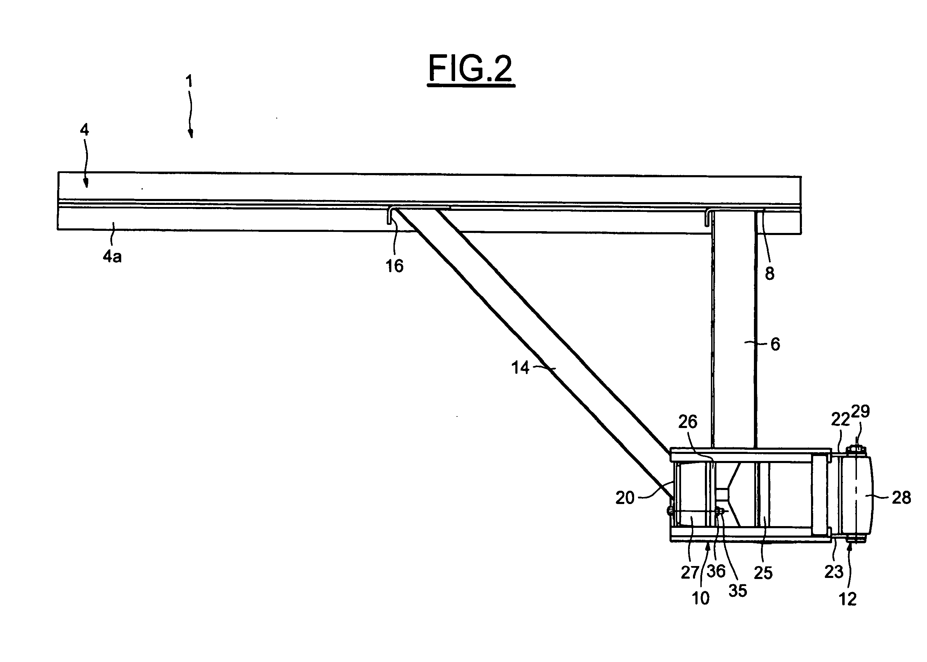

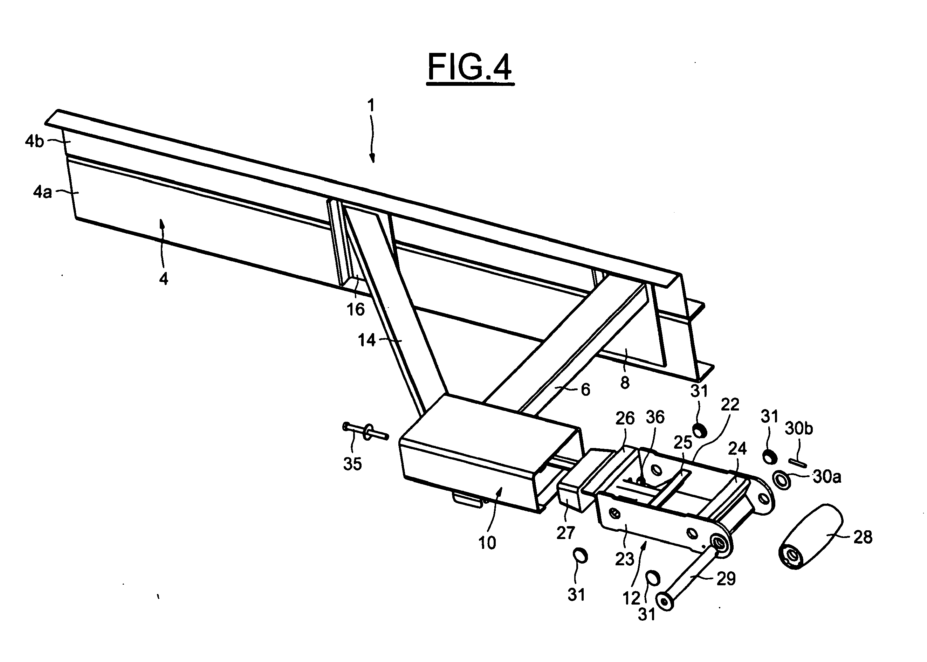

Comme illustré plus visiblement sur les figures 2 à 4, le fourreau de guidage 10, ouvert à chacune de ses extrémités, et présente en section un profil sensiblement en C orienté vers le bas. Le fourreau 10 est rapporté à l'extrémité extérieure du bras 6, de manière à être orienté de façon horizontale et à s'étendre sensiblement suivant une direction parallèle à l'axe 3 du châssis 1. Le fourreau 10 comprend, au niveau d'une extrémité avant, une plaque d'appui 20, par exemple rapportée par soudage, sur laquelle est montée une extrémité de la jambe de force 14.

En ce qui concerne la partie mobile 12, celle-ci comprend deux bras 22 et 23 s'étendant sensiblement suivant une direction parallèle à l'axe 3 du châssis, et des éléments de rigidification 24 et 25 montés transversalement entre lesdits bras de manière à maintenir un écartement transversal sensiblement constant. Les éléments de rigidification 24 et 25 peuvent par exemple se présenter sous la forme de plaques d'épaisseur mince. L'élément de rigidification 24 est monté à proximité d'une extrémité arrière des bras 22 et 23, l'élément de rigidification 25 étant monté sensiblement au milieu desdits bras.

La partie mobile 12 est également pourvu d'une platine 26 de support rapportée au niveau d'une extrémité avant des bras 22 et 23 et s'étendant transversalement entre eux, et d'un élément amortisseur 27 élastique disposé sur une face avant de la platine 26 de support.

L'élément amortisseur 27 élastique, de forme générale parallélépipédique, est réalisé en matière synthétique souple, par exemple en caoutchouc. Il peut par exemple comprendre des trous (non représentés) situés à proximité des coins pour le passage de vis de fixation, de manière à assujettir l'élément amortisseur 27 sur la face avant de la platine 26. Bien entendu, il est également envisageable de prévoir d'autres moyens de fixation, par exemple le collage.

L'élément amortisseur 27 élastique présente un encombrement dans le sens transversal et vertical sensiblement égal à l'encombrement de la platine 26.

Du côté opposé à la platine 26, l'élément amortisseur 27 vient en contact contre la plaque d'appui 20 sur laquelle est rapportée la jambe de force 14. Ainsi, l'élément amortisseur 27 est disposé entre la platine 26 de la partie mobile 12 et la jambe de force 14 du longeron 4. L'élément amortisseur 27 permet notamment l'amortissement des chocs horizontaux lors de l'accostage du véhicule automobile contre un quai de chargement.

Pour l'accostage du véhicule, la partie mobile 12 comprend également au niveau de l'extrémité arrière des bras 22 et 23, un rouleau 28 de contact. Le rouleau 28 est monté à rotation suivant un axe sensiblement horizontal, par l'intermédiaire d'un arbre de support 29 fixé transversalement au niveau des bras 22 et 23, notamment via une rondelle 30a et une goupille 30b. Le rouleau 28 de contact est avantageusement réalisé en matière métallique, notamment en acier, afin d'obtenir des caractéristiques de rigidité élevées.

En effet, une fois l'accostage du véhicule effectué contre le quai, on réalise généralement le chargement ou le déchargement dudit véhicule, ce qui provoque un déplacement vertical du châssis relativement au quai, générant des efforts de frottement au niveau du rouleau 28.

Ainsi, la disposition horizontale du rouleau 28 permet de transformer ces efforts de frottement en une rotation dudit rouleau. En outre, l'utilisation de matière rigide pour le rouleau 28 permet d'obtenir un rouleau qui soit particulièrement résistant au cours du temps.

Avantageusement, la surface extérieure de révolution du rouleau 28 est sensiblement bombée. Elle est par exemple réalisée sous la forme d'une portion d'arc de cercle ou d'ellipse. L'extrémité arrière du rouleau 28 est décalée vers l'arrière, en considérant l'extrémité arrière du châssis 1.

D'une manière analogue, la partie mobile 11 monté sur le bras 7 comprend un élément amortisseur (non visible sur les figures) et un rouleau 34, qui sont agencés d'une manière identique à celle qui vient d'être décrite.

Lors du recul du véhicule automobile en direction d'un quai de chargement, le premier contact entre le quai de chargement et le châssis 1 s'effectue au niveau des rouleaux 28 et 34.

Si le véhicule automobile continue de reculer, le déplacement vers l'arrière du châssis 1 provoque un coulissement des parties mobiles 12 et 13 à l'intérieur des fourreaux de guidage 10 et 11 respectivement. A cet égard, la partie mobile 12 comprend également, au niveau de chacun des bras 22 et 23, des plots cylindriques 31. Les plots cylindriques 31, ici au nombre de deux pour chacun desdits bras, peuvent par exemple être réalisés en caoutchouc. Les plots cylindriques 31 sont rapportés sur les bras 22 et 23 au niveau d'alésages spécialement dédiés à cet effet, de manière à venir légèrement en saillie vers l'extérieur pour obtenir un frottement entre lesdits plots et des parois latérales du fourreau de guidage 10. Les plots 31 constituent ainsi des éléments de friction pour le guidage relatif de la partie mobile 12 et du fourreau 10. De manière analogue, la partie mobile 13 comprend de tels plots de friction agencés de façon similaire.

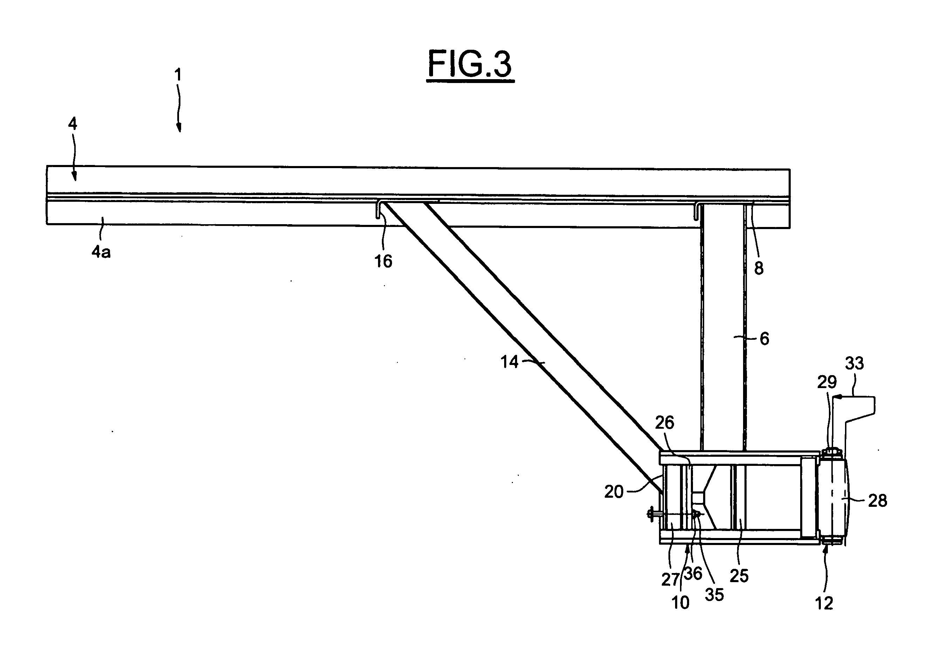

Les parties mobiles 12 et 13 coulissent linéairement selon l'axe 3 à l'intérieur des fourreaux de guidage 10 et 11 jusqu'à ce que l'élément amortisseur soit entièrement comprimé. Une telle compression correspond sensiblement à un déplacement linéaire de la partie mobile de l'ordre de 35 mm, illustrée schématiquement sur la figure 3, par la flèche 33.

Ainsi, chaque partie mobile 12, 13 peut coulisser entre une position extrême éloignée par rapport au fourreau 10, 11 dans laquelle l'élément amortisseur 27 n'est pas sollicité en compression, et une position extrême rapprochée dans laquelle l'élément élastique 27 est entièrement comprimé. Dans chacune des positions extrêmes, les rouleaux 28 et 34 sont en saillie vers l'extérieur par rapport au fourreau de guidage 10 et 11, respectivement.

Si le véhicule automobile recule encore, les parties mobiles 12 et 13 transmettent, directement et sans effet d'amortissement, les efforts encaissés aux jambes de force 14 et 15, ainsi qu'aux longerons 4 et 5 formant respectivement deux triangles rigides indéformables particulièrement efficaces pour encaisser des efforts élevés.

Lors d'un déplacement du véhicule automobile vers l'avant, les parties mobiles 12 et 13 reviennent dans leur position initiale sous l'action de l'élément amortisseur élastique associé.

Afin d'éviter la désolidarisation relative de la partie mobile 12 et du fourreau de guidage 10, le dispositif 1 comprend également au moins une tige 35 filetée et un écrou 36 de fixation associé monté sur ladite tige 35 de manière qu'une tête de la tige 35 vienne en appui contre la face avant de la plaque 20 lorsque l'élément amortisseur 27 n'est pas sollicité en compression, l'écrou 36 étant en appui contre la platine 26 dans cette position. Lorsque l'élément élastique 27 est comprimé, l'écrou 36 reste en appui contre la platine 26, la tête de la tige 35 étant située à distance de la plaque 20. D'une manière analogue, la partie mobile 13 et le fourreau 11 comprennent au moins une telle tige de fixation et écrou (non représentés).

Dans le cas d'un recul suivant une direction sensiblement inclinée par rapport à une direction normale au quai de chargement, seule une des parties mobiles 12 et 13 coulisse linéairement à l'intérieur du fourreau de guidage 10 et 11 correspondant suivant l'axe 3 du corps de châssis 2.

L'utilisation de rouleaux de contact 28 et 34 comprenant une surface extérieure de révolution sensiblement bombée, présente l'avantage de permettre de réduire sensiblement les éventuels risques de détérioration prématurés. En effet, avec une surface extérieure de révolution sensiblement bombée, lors d'un tel recul suivant une direction inclinée, la surface de contact entre les rouleaux 28, 34 et le quai de chargement est augmentée. Dans ces conditions, le risque d'avoir une détérioration de la périphérie de la surface latérale de chacun des rouleaux 28, 34 est diminué par rapport à une utilisation de rouleaux de forme générale cylindrique.

Dans des variantes de réalisation, il est également envisageable de prévoir des parties mobiles comprenant une pluralité de rouleaux de contact montés à rotation suivant un axe sensiblement horizontal qui soit aligné horizontalement et/ou aligné verticalement.

Grâce à l'invention, on obtient ainsi un châssis de véhicule automobile présentant de nombreux avantages, parmi lesquels une durée de vie augmentée des éléments amortisseurs, notamment par la réalisation d'un corps de châssis comprenant au moins une partie mobile apte à se déplacer linéairement par rapport audit corps et pourvue sur une face avant d'un élément amortisseur en matériau souple de manière à encaisser des chocs horizontaux lors de l'accostage du véhicule, et sur une face arrière, d'au moins un rouleau en matériau rigide monté à rotation suivant un axe horizontal pour accroître la résistance à l'arrachement vertical du dispositif.

## Revendications

1. Dispositif de châssis de véhicule pourvu d'un corps de châssis (2) allongé s'étendant sensiblement horizontalement, d'au moins une partie mobile (12) par rapport au corps de châssis et comprenant au moins un rouleau (28) en matériau rigide monté à rotation suivant un axe horizontal et un élément amortisseur (27) en matériau souple, **caractérisé en ce que** la partie mobile est montée de façon coulissante par rapport au corps de châssis et comprend des bras (22, 23) et une platine (26) de support s'étendant transversalement entre l'extrémité avant des bras, le rouleau (28) étant monté à l'extrémité arrière des bras et l'élément amortisseur (27) monté sur une face avant de la platine de support, ledit élément amortisseur (27) présentant dans les sens transversal et vertical un encombrement sensiblement égal à celui de la platine (26) de support, et **en ce que** le dispositif est en outre pourvu d'un fourreau (10) de guidage fixé sur le corps de châssis et à l'intérieur duquel sont montés la platine (26) de support et les bras (22, 23) de la partie mobile, le fourreau comportant des parois latérales et une plaque d'appui (20) avant contre laquelle l'élément amortisseur (27) vient en contact.

2. Dispositif selon la revendication 1, dans lequel la partie mobile (12) coulisse longitudinalement par rapport au corps de châssis.

3. Dispositif selon les revendications 1 ou 2, comprenant en outre des éléments de friction (31) montés sur la partie mobile et aptes à coopérer avec les parois latérales du fourreau de guidage (10) pour le guidage relatif de la partie mobile (12) et dudit fourreau.

4. Dispositif selon l'une quelconque des revendications précédentes, comprenant une jambe de force (14) montée obliquement entre le corps de châssis (2) et le fourreau de guidage (10).

5. Dispositif selon l'une quelconque des revendications précédentes, comprenant au moins un bras (6) monté à une extrémité arrière du corps de châssis de façon sensiblement transversale par rapport audit corps et s'étendant vers l'extérieur, la partie mobile (12) étant montée sur ledit bras.

6. Dispositif selon l'une quelconque des revendications précédentes, dans lequel le rouleau (28) est réalisé en matière métallique.

7. Dispositif selon l'une quelconque des revendications précédentes, dans lequel le rouleau (28) comprend une surface extérieure de révolution sensiblement bombée.

8. Dispositif selon l'une quelconque des revendications précédentes, dans lequel l'élément amortisseur (27) comprend un bloc élastomère.

9. Véhicule automobile, du type poids lourd, comprenant un dispositif de châssis selon l'une quelconque des revendications précédentes.

## Claims

1. Vehicle chassis device provided with an elongate chassis body (2) extending substantially horizontally, with at least one moving part (12) able to move with respect to the chassis body and comprising at least one roller (28) made of a rigid material mounted to rotate about a horizontal axis and a buffer element (27) made of a soft material, **characterized in that** the moving part is slideably mounted with respect to the chassis body and comprises arms (22, 23) and a mounting plate (26) extending transversely between the front end of the arms, the roller (28) being mounted at the rear end of the arms and the buffer element (27) being mounted on a front face of the mounting plate, the said buffer element (27) having, in the transverse and vertical directions, a size substantially equal to that of the mounting plate (26), and **in that** the device is also provided with a guide sleeve (10) attached to the chassis body and in which the mounting plate (26) and the arms (22, 23) of the moving part are fitted, the sleeve comprising side walls and a front pressure plate (20) with which the buffer element (27) comes into contact.

2. Device according to Claim 1, in which the moving part (12) slides longitudinally with respect to the chassis body.

3. Device according to Claim 1 or 2, further comprising friction elements (31) mounted on the moving part and able to engage with the side walls of the guide sleeve (10) for the relative guidance of the moving part (12) and of the said sleeve.

4. Device according to any one of the preceding claims, comprising a strut (14) mounted obliquely between the chassis body (2) and the guide sleeve (10).

5. Device according to any one of the preceding claims, comprising at least one arm (6) mounted at a rear end of the chassis body substantially transversely to the said body and extending outwards, the moving part (12) being mounted on the said arm.

6. Device according to any one of the preceding claims, in which the roller (28) is made of metal.

7. Device according to any one of the preceding claims, in which the roller (28) has a substantially barrelled exterior surface of revolution.

8. Device according to any one of the preceding claims, in which the buffer element (27) comprises a block elastomer.

9. Motor vehicle of the heavy goods vehicle type comprising a chassis device according to any one of the preceding claims.

## Patentansprüche

1. Fahrgestellvorrichtung eines Kraftfahrzeugs, die mit einem länglichen Fahrgestellkörper (2), der sich im Wesentlichen waagrecht erstreckt, und mit mindestens einem Teil (12) versehen ist, der bezüglich des Fahrgestellkörpers beweglich ist und mindestens eine Rolle (28) aus steifem Material, die gemäß einer waagrechten Achse drehbar montiert ist, und ein Dämpfungselement (27) aus weichem Material enthält, **dadurch gekennzeichnet, dass** der bewegliche Teil bezüglich des Fahrgestellkörpers gleitend montiert ist und Arme (22, 23) und eine Tragplatte (26) aufweist, die sich quer zwischen dem Vorderende der Arme erstreckt, wobei die Rolle (28) am hinteren Ende der Arme und das Dämpfungselement (27) auf eine Vorderseite der Tragplatte montiert ist, wobei das Dämpfungselement (27) in Querrichtung und senkrechter Richtung einen Raumbedarf im Wesentlichen gleich demjenigen der Tragplatte (26) aufweist, und dass die Vorrichtung außerdem mit einer Führungshülse (10) versehen ist, die am Fahrgestellkörper befestigt ist und in deren Innerem die Tragplatte (26) und die Arme (22, 23) des beweglichen Teils montiert sind, wobei die Hülse Seitenwände und eine vordere Auflageplatte (20) aufweist, gegen die das Dämpfungselement (27) in Kontakt kommt.

2. Vorrichtung nach Anspruch 1, bei der der bewegliche Teil (12) in Längsrichtung bezüglich des Fahrgestellkörpers gleitet.

3. Vorrichtung nach den Ansprüchen 1 oder 2, die außerdem Reibungselemente (31) enthält, die auf den beweglichen Teil montiert sind und mit den Seitenwände der Führungshülse (10) zur relativen Führung des beweglichen Teils (12) und der Hülse zusammenwirken können.

4. Vorrichtung nach einem der vorhergehenden Ansprüche, die ein Federbein (14) enthält, das schräg zwischen dem Fahrgestellkörper (2) und der Führungshülse (10) montiert ist.

5. Vorrichtung nach einem der vorhergehenden Ansprüche, die mindestens einen Arm (6) enthält, der an einem hinteren Ende des Fahrgestellkörpers im Wesentlichen quer zum Körper und sich nach außen erstreckend montiert ist, wobei der bewegliche Teil (12) auf den Arm montiert ist.

6. Vorrichtung nach einem der vorhergehenden Ansprüche, bei der die Rolle (28) aus metallischem Material hergestellt ist.

7. Vorrichtung nach einem der vorhergehenden Ansprüche, bei der die Rolle (28) eine im Wesentlichen gewölbte äußere drehsymmetrische Fläche enthält.

8. Vorrichtung nach einem der vorhergehenden Ansprüche, bei der das Dämpfungselement (27) einen Elastomerblock enthält.

9. Kraftfahrzeug vom Typ Schwerlastwagen, das eine Fahrgestellvorrichtung nach einem der vorhergehenden Ansprüche aufweist.
